# EUROPEAN PATENT SPECIFICATION

(11) **EP 1 098 103 B1**
(45) Date of publication and mention of the grant of the patent: **01.02.2006**
(21) Application number: 00124118.1
(22) Date of filing: 06.11.2000
(51) Int. Cl.: F16D 66/02

(54) **Wear detector for a vehicle braking member**
Verschleissfühler für eine Fahrzeugbremse
Capteur d'usure pour frein de véhicule

(30) Priority: 05.11.1999 IT TO990955
(43) Date of publication of application: 09.05.2001
(73) Proprietor: I.C.P. S.r.l., 14020 Piova' Massaia (IT)
(72) Inventor: Razzano, Tancredi, 14020 Piova' Massaia (IT)
(74) Representative: Eccetto, Mauro

(56) References cited:
- EP-A- 0 546 759
- DE-U- 9 215 810
- GB-A- 2 194 824
- US-A- 5 839 545

## Description

The present invention relates to a wear detector for a vehicle braking member, in particular a brake pad, to which the following description refers purely by way of example.

As is known, a vehicle brake pad comprises a supporting plate; a block of friction material carried by the supporting plate; and a wear detector for detecting a limit wear condition of the block of friction material.

Known wear detectors comprise an electric detecting circuit or wiring system; and a substantially cylindrical supporting case which is connectable removably to the supporting plate to replace the detector in the event of a fault on the detecting wiring system.

The detecting wiring system comprises a detecting end portion, which comes into contact with the brake disk on the vehicle wheel to indicate a limit wear condition of the block of friction material, is housed inside the case, and is normally retained inside the case by means of glue or a threaded connection.

Known wear detectors, as for instance known from EP-A-0 546 759, of the above type involve a good deal of time and cost to assemble, and provide for relatively poor sealing.

When glued, in fact, the glue takes a relatively long time to dry, thus reducing output and increasing cost. What is more, commonly used glues are pollutant, and therefore harmful not only to the environment but also to assembly workers.

In addition to the above drawbacks, the glue, in use, also fails to provide for fluidtight sealing between the case and the detecting end portion, on account of the inevitable formation, in the layer of glue, of channels or air pockets permitting infiltration of external agents, in particular water and damp, so that the detecting end portion may supply spurious signals relative to wear on the block of friction material.

Known detectors with threaded connections also fail to provide for fluidtight sealing between the case and the detecting end portion, and, what is more, comprise a relatively larger number of components, thus increasing manufacturing and assembly time and cost.

To solve the above problems, some known detectors have the case molded onto the detecting end portion. Such a solution, however, calls for treating the wiring system prior to molding the case, as well as for special-purpose equipment for molding the case, and positioning devices for setting the detecting end portion in a fixed position with respect to the case to be molded.

It is an object of the present invention to provide a wear detector for a vehicle braking member, designed to provide a straightforward, low-cost solution to the aforementioned problems.

According to the present invention, there is provided a wear detector as defined in claim 1.

An assembly for forming a wear detector is defined in claim 17.

A non-limiting embodiment of the invention will be described by way of example with reference to the accompanying drawings, in which:
Figure 1 shows, with parts removed for clarity, a preferred embodiment of the vehicle braking member wear detector according to the present invention;
Figure 2 shows a first detail of the Figure 1 wear detector;
Figure 3 shows a section along line III-III in Figure 2;
Figures 4, 5 and 6 show three different views of a second detail of the Figure 1 wear detector;
Figure 7 shows an exploded section of a further embodiment of the vehicle braking member wear detector according to the present invention;
Figure 8 shows a third detail of the Figure 7 wear detector;
Figure 9 shows a section along line IX-IX in Figure 8.

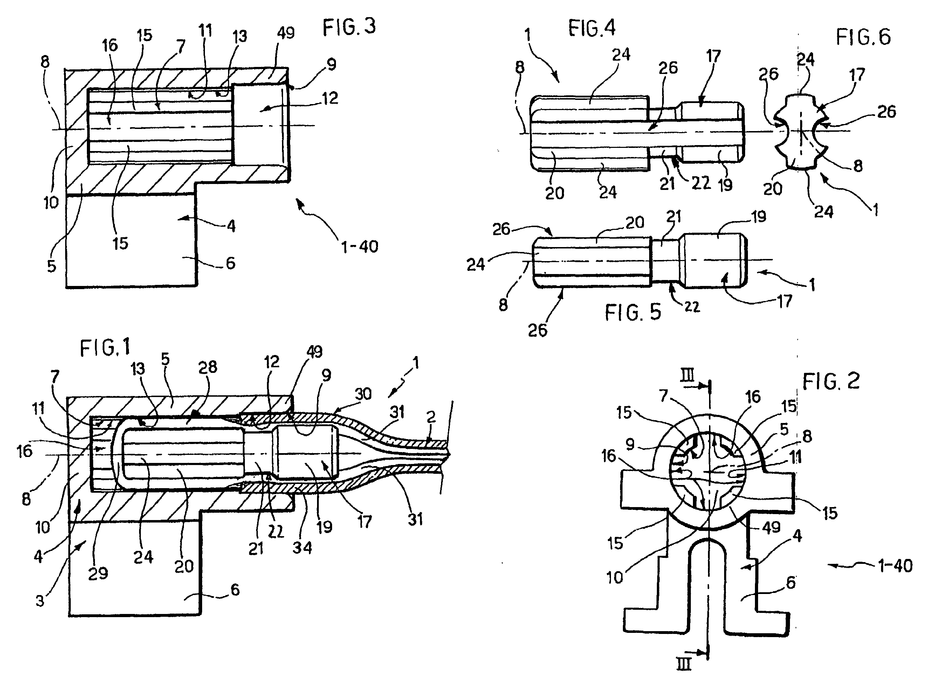

Number 1 in Figure 1 indicates a wear detector for a braking member (not shown) of a vehicle (not shown), and in particular for a brake pad comprising a supporting plate and a block of friction material carried by the plate.

Detector 1 comprises a so-called "bipolar" wiring system 2 (shown partly) for detecting a limit wear condition of the block of friction material; and an assembly 3 for supporting wiring system 2 and which is connected to the plate.

With reference to Figures 1 to 3, assembly 3 is preferably made of polyimide plastic material, and comprises a connecting body 4 formed in one piece and in turn comprising a hooded portion 5 defining a case, and a portion 6 for connection to the plate. Portion 5 has a dead inner cavity 7, which extends along an axis 8, has an axial opening 9 through which wiring system 2 extends, and is defined by an end wall 10 and by a cylindrical surface 11. Surface 11 comprises two axial end portions 12 and 13; portion 12 defines opening 9; and portion 13 is adjacent to wall 10 and has four equally spaced axial ribs 15 extending radially inside cavity 7 and defining four axial grooves 16.

As shown in Figures 1, 4, 5 and 6, cavity 7 is engaged partly by a cylindrical insert 17, which forms part of assembly 3, has an axis coincident with axis 8, and comprises two coaxial opposite end portions 19 and 20 connected to each other by a coaxial intermediate portion 21 defining a circumferential groove 22.

Portion 19 extends through and closes opening 9, and has an outside diameter approximately equal to but no larger than the inside diameter of portion 12. Portion 20, on the other hand, extends inside cavity 7, and comprises two diametrically opposite axial ribs 24 extending radially outwards to engage two respective grooves 16 and keep insert 17 in a fixed angular position with respect to hooded portion 5.

With particular reference to Figure 6, insert 17 has two diametrically opposite axial grooves 26 equally spaced angularly by ribs 15 so as to extend at two respective grooves 16.

With reference to Figure 1, grooves 26 are engaged by two portions of an electric cable 28 forming part of wiring system 2 and comprising a detecting portion 29, which is wound axially into a U about portion 20, is therefore housed completely inside cavity 7, and provides, in use, for detecting the limit wear condition of the block of friction material.

Wiring system 2 also comprises an elastic outer sheath 30, which covers two end branches 31 of cable 28 extending on opposite sides of detecting portion 29, and comprises an end portion 34 surroundings portions 19 and 21 and which is forced radially between portion 19 and portion 12 to seal cavity 7 defined by portion 5 and insert 17.

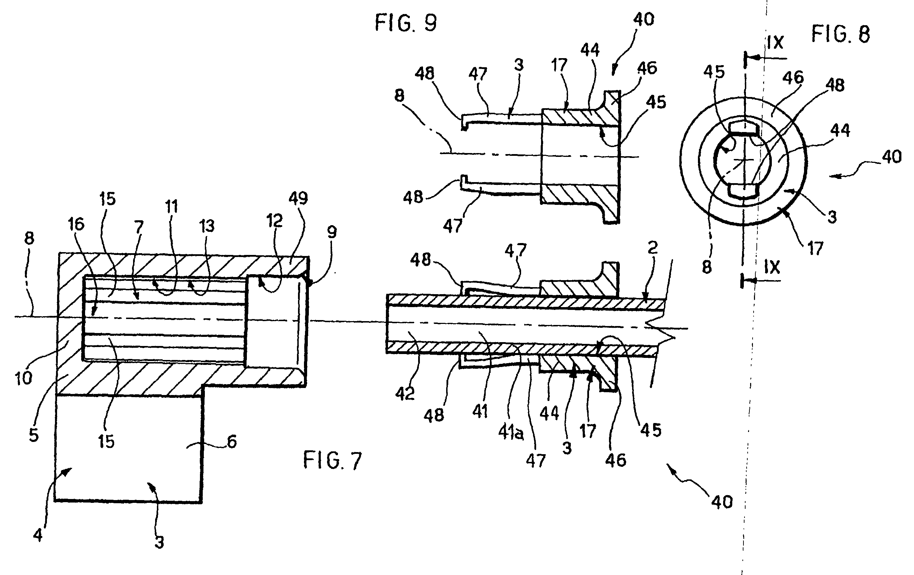

Figures 7 to 9 show a detector 40 similar to detector 1, and the component parts of which are indicated using the same reference numbers as for detector 1. Detector 40 differs from detector 1 by wiring system 2 being a so-called "single-pole" type, i.e. defined by a single electric cable, and comprising a metal core 41 and an elastic insulating covering 41a which cooperates with a boundary surface of a hole 45 to close hole 45 in fluidtight manner. Wiring system 2 terminates with a free detecting end portion 42 extending along axis 8 inside cavity 7 and for detecting the limit wear condition.

Detector 40 also differs from detector 1 by insert 17 comprising a tubular portion 44, which has an outside diameter approximately equal to but no smaller than the inside diameter of portion 12, so as to fit tightly to portion 12 to close opening 9 in fluidtight manner. Tubular portion 44 has an axial through hole 45 through which wiring system 2 extends, and, at the axial end outside portion 5, has an integral flange 46 which rests axially against portion 5 when detector 40 is assembled.

As shown in Figures 8 and 9, insert 17 also comprises two axial appendixes 47, which extend, integrally with tubular portion 44 and facing each other, inside cavity 7, and terminate with respective radial teeth 48 facing each other and separated by a distance smaller than the outside diameter of wiring system 2.

With reference to Figure 7, the two appendixes 47 are elastically deformable, in particular radially, and provide between them for retaining wiring system 2 with detecting portion 42 in a fixed axial position.

Instead of or together with sheath 30 or covering 41a as a sealing element, at least one of tubular portion 44 and a portion 49 of portion 5 defining opening 9 is elastically deformable, so as to be forced elastically, when insert 17 is connected to portion 5, and so seal cavity 7.

To assemble detector 1, wiring system 2 is first connected to insert 17 by winding detecting portion 29 axially onto portion 20 and fitting portion 34 of sheath 30 onto portion 19 to hold cable 28 on insert 17. Portion 34 is fitted on so that the free end elastically engages groove 22 to facilitate insertion of sheath 30 inside opening 9. Insert 17 is inserted through opening 9, so that cable 28 and ribs 24 slide along respective grooves 16 to insert sheath 30 inside cavity 7.

Insert 17 is then pushed axially to force portion 34 of the sheath against portion 12 and close opening 9 in fluidtight manner, and into a position in which sheath 30 rests axially against ribs 15, and detecting portion 29 is detached from end wall 10 (Figure 1).

To assemble detector 40, wiring system 2 is inserted through hole 45, which is closed in fluidtight manner by covering 41a, so that detecting portion 42 projects axially beyond teeth 48 of appendixes 47, which are deformed elastically and retain wiring system 2 in a fixed axial position with respect to insert 17. Insert 17 is then inserted inside cavity 7, by sliding the two appendixes 47 along two grooves 16 and forcing tubular portion 44 inside portion 5 to close opening 9 in fluidtight manner, until flange 46 comes to rest axially against portion 5.

In actual use, connecting portion 6 is fitted to the brake pad plate in a fixed relative position. When wear on the block of friction material nears the limit condition, the relative brake disk (not shown) on the vehicle gradually wears down end wall 10 axially to eventually come into contact with detecting portion 42 of detector 40, thus closing a relative electric circuit, or to shear detecting portion 29 of detector 1, thus opening a relative electric circuit, and so signaling the limit wear condition to the driver of the vehicle.

Detector 1, 40 is therefore cheap, fast, and easy to assemble while at the same time providing for excellent sealing.

Assembly 3 in fact is assembled by axially inserting and forcing insert 17 easily and quickly inside portion 5 with no gluing required, thus greatly reducing assembly time and cost as compared with known solutions, and also eliminating the use of pollutant glue. Simply using elastic sheath 30 - forming part of commonly used wiring systems - as an elastic sealing element provides, on the one hand, for sealing cavity 7 housing detecting portion 29, 42, and, on the other, for further simplifying assembly and eliminating the need for additional elastically deformable elements.

As compared with known solutions with threaded connections for connecting wiring system 2 to the case, detector 1, 40 ensures fluidtight sealing of cavity 7, is faster to assemble, and comprises fewer components by assembly 3 only comprising body 4 and insert 17.

As compared with known solutions in which the case is molded on, detector 1, 40 requires no preparation of wiring system 2 or special equipment for molding the case or positioning wiring system 2 with respect to the case to be molded.

The positioning of detecting portion 29, 42 with respect to portion 5 is assured, on detector 1, by sheath 30 holding cable 28 on portion 20, and, on detector 40, by appendixes 47 and flange 46, which defines an axial reference shoulder portion for insert 17 with respect to portion 5.

Moreover, the same body 4 may be used for both "bipolar" and "single-pole" wiring systems, by simply using two different inserts 17, thus greatly reducing manufacturing cost as compared with known solutions requiring different production lines for entirely different cases.

Moreover, in the event wiring system 2 is damaged, e.g. accidentally cut, in use, thus resulting in spurious wear signals, wiring system 2 alone may be replaced by simply extracting insert 17 from cavity 7 and leaving body 4 connected to the brake pad plate, unlike known solutions in which the whole case must be removed from the plate and the entire detector replaced. As such, body 4 may be connected permanently to the brake pad with no releasable connection in between, thus reducing production and assembly time and cost.

Clearly, changes may be made to detector 1, 40 as described herein without, however, departing from the scope of the present invention.

In particular, detector 1, 40 may be formed using assembly 3 and a wiring system forming part of the vehicle electric system, and/or may be used for a brake block.

## Claims

1. A wear detector (1; 40) for a vehicle braking member, comprising a wiring system (2) having a detecting portion (29; 42) for detecting, in use, a limit wear condition of said braking member; and a supporting assembly (3) for supporting the detecting portion (29; 42) and the wiring system (2), said wear detector further comprising a hooded case (5) housing said detecting portion (29; 42) and having an opening (9) fitted,through which said wiring system (2) extends; **characterized in that** said supporting assembly (3) also comprises an insert (17) for supporting said detecting portion (29; 42), said insert having at least one passage (26; 45) engaged by the wiring system (2) and extending at least partly inside the hooded case (5); elastically deformable means (30, 44, 49, 41a) cooperating with said insert (17) to close said opening (9) and define a sealed chamber (7) housing at least the detecting portion (29; 42).

2. A detector as claimed in Claim 1, **characterized in that** said wiring system (2) comprises a conducting core (28; 41), and an elastically deformable cover portion (30; 41a) covering said core (28; 41); said cover portion (30; 41a) forming at least part of said elastically deformable means (30, 33, 49, 41a).

3. A detector as claimed in Claim 1 or 2, **characterized in that** at least one of said hooded case (5) and said insert (17) comprises an elastically deformable portion (44) (49) forming part of said elastically deformable means (30, 44, 49, 41a).

4. A detector as claimed in any one of the foregoing Claims, **characterized by** comprising retaining means (30, 20; 47, 44) for retaining said detecting portion (29; 42) in a fixed position with respect to said insert (17).

5. A detector as claimed in any one of the foregoing Claims, **characterized in that** said retaining means (30, 20; 47, 44) comprise at least part (30; 44) of said elastically deformable means (30, 44, 49, 41a).

6. A detector as claimed in Claim 4 or 5, **characterized in that** said retaining means (30, 20; 47, 44) comprise at least one elastic appendix (47) carried by said insert (17).

7. A detector as claimed in any one of the foregoing Claims, **characterized in that** said insert (17) has an axis (8), and comprises a first axial end portion (19; 44) extending through said opening (9), and a second axial end portion (20; 47) extending inside said sealed chamber (7) and supporting said detecting portion (29; 42).

8. A detector as claimed in Claims 6 and 7, **characterized in that** said second axial end portion (47) comprises said elastic appendix (47).

9. A detector as claimed in Claim 7, **characterized in that** said insert (17) has two axial grooves (26), each defining a respective said passage; said detecting portion (29) being wound into a U about said second axial end portion (20).

10. A detector as claimed in Claim 9, **characterized in that** said wiring system (2) comprises a sheath (30) surrounding said first axial end portion (19).

11. A detector as claimed in Claim 10, **characterized in that** said insert has an intermediate circumferential groove (22) engaged by a free end portion (34) of said sheath (30).

12. A detector as claimed in any one of Claims 7 to 11, **characterized by** comprising angular positioning means (16, 24; 16, 47) interposed between said insert (17) and said hooded case (5) to keep said insert (17) in a fixed angular position with respect to said hooded case (5) and about said axis (8).

13. A detector as claimed in Claim 12, **characterized in that** said angular positioning means (16, 24; 16, 47) comprise at least one seat (16) formed in one of said hooded case (5) and said insert (17); and at least one appendix (24; 47) carried by the other of said hooded case (5) and said insert (17) and engaging said seat (16).

14. A detector as claimed in any one of Claims 7 to 13, **characterized by** comprising axial positioning means (15; 46) for positioning the insert (17) in an axial reference position with respect to said hooded case (5).

15. A detector as claimed in any one of the foregoing Claims, **characterized in that** said passage (26; 45) is defined by a through hole (45).

16. A detector as claimed in any one of the foregoing Claims, **characterized in that** said supporting means (3) comprise a connecting portion (6) for connection to said braking member and formed in one piece with said hooded case (5).

17. An assembly (3) for forming a wear detector (1; 40) for a vehicle braking member; the assembly (3) comprising a hooded case (5) which is connected to said braking member, housing a detecting portion (29; 42) of a wiring system (2), and having an opening (9) through which the wiring system (2) is fitted; **characterized by** said assembly further comprising an insert (17) for supporting said detecting portion (29; 42), said insert having at least one passage (26; 45) being engaged by said wiring system (2), said insert being inserted through said opening (9) to partly close the opening (9), and cooperating with said wiring system (2) to close said opening (9) in fluidtight manner.

18. An assembly as claimed in Claim 17, **characterized in that** at least one of said insert (17) and said hooded case (5) comprises a respective elastically deformable portion (44) (49) cooperating with the other of said insert (17) and said hooded case (5) to close said opening (9) in fluidtight manner.

19. An assembly as claimed in Claim 17 or 18, **characterized in that** said insert (17) has a through hole (45) through which said wiring system (2) is fitted.

20. An assembly as claimed in Claim 17 or 18, **characterized in that** said insert (17) has two parallel grooves (26) engaged by respective portions of said wiring system (2).

## Patentansprüche

1. Verschleißdetektor (1; 40) für ein Bremsglied für ein Fahrzeug, der ein Verdrahtungssystem (2) umfasst, welches einen Erfassungsbereich (29; 42) aufweist, um, im Betrieb, einen Verschleißgrenzzustand des Bremsglieds zu erfassen; und einen tragenden Aufbau (3), um den Erfassungsbereich (29; 42) und das Verdrahtungssystem (2) zu tragen, wobei der Verschleißdetektor ein Haubengehäuse (5) umfasst, das den Erfassungsbereich (29; 42) aufnimmt und eine angepasste Öffnung (9) aufweist, durch die sich das Verdrahtungssystem (2) erstreckt; **dadurch gekennzeichnet, dass** der tragenden Aufbau (3) auch einen Einsatz (17) umfasst, um den Erfassungsbereich (29; 42) zu tragen, wobei der Einsatz wenigstens eine Passage (26; 45) aufweist, die in Eingriff mit dem Verdrahtungssystem (2) ist und sich wenigstens teilweise innerhalb des Haubengehäuses (5) erstreckt; ein elastisch deformierbares Mittel (30, 44, 49, 41a), das mit dem Einsatz (17) zusammenwirkt, um die Öffnung (9) zu schließen und eine abgedichtete Kammer (7) zu definieren, die wenigstens den Erfassungsbereich (29; 42) aufnimmt.

2. Detektor nach Anspruch 1, **dadurch gekennzeichnet, dass** das Verdrahtungssystem (2) einen leitenden Kern (28; 41) umfasst, und einen elastisch deformierbaren Abdeckbereich (30; 41a), der den Kern (28; 41) abdeckt; wobei der Abdeckbereich (30; 41a) wenigstens einen Teil des elastisch deformierbaren Mittels (30, 33, 49, 41a) bildet.

3. Detektor nach Anspruch 1 oder 2, **dadurch gekennzeichnet, dass** von dem Haubengehäuse (5) und dem Einsatz (17) wenigstens einer einen elastisch deformierbaren Bereich (44) (49) umfasst, der einen Teil des elastisch deformierbaren Mittels (30, 44, 49, 41a) bildet.

4. Detektor nach irgend einem der vorherigen Ansprüche, **dadurch gekennzeichnet, dass** er ein Rückhaltemittel (30, 20; 47, 44) umfasst, um den Erfassungsbereich (29; 42) in einer festen Position bezüglich dem Einsatz (17) zu halten.

5. Detektor nach irgend einem der vorherigen Ansprüche, **dadurch gekennzeichnet, dass** das Rückhaltemittel (30, 20; 47, 44) wenigstens einen Teil (30; 44) des elastisch deformierbaren Mittels (30, 44, 49, 41a) umfasst.

6. Detektor nach Anspruch 4 oder 5, **dadurch gekennzeichnet, dass** das Rückhaltemittel (30, 20; 47, 44) wenigstens einen elastischen Anhang (47) umfasst, der von dem Einsatz (17) getragen wird.

7. Detektor nach irgend einem der vorherigen Ansprüche, **dadurch gekennzeichnet, dass** der Einsatz (17) eine Achse (8) aufweist, und einen ersten axialen Endbereich (19; 44) umfasst, der sich durch die Öffnung (9) erstreckt, und einen zweiten axialen Endbereich (20; 47), der sich innerhalb der abgedichteten Kammer (7) erstreckt und den Erfassungsbereich (29; 42) trägt.

8. Detektor nach Anspruch 6 und 7, **dadurch gekennzeichnet, dass** der zweite axiale Endbereich (47) den elastischen Anhang (47) umfasst.

9. Detektor nach Anspruch 7, **dadurch gekennzeichnet, dass** der Einsatz (17) zwei axiale Rillen (26) umfasst, von denen jede jeweils eine Passage definiert; wobei der Erfassungsbereich (29) in ein U um den zweiten axialen Endbereich (20) gewunden ist.

10. Detektor nach Anspruch 9, **dadurch gekennzeichnet, dass** das Verdrahtungssystem (2) eine Hülle (30) umfasst, die den ersten axialen Endbereich (19) umgibt.

11. Detektor nach Anspruch 10, **dadurch gekennzeichnet, dass** der Einsatz eine Rille (22) in Umfangsrichtung in der Mitte aufweist, die in Eingriff mit einem freien Endbereich (34) der Hülle (30) ist.

12. Detektor nach irgend einem der Ansprüche 7 bis 11, **dadurch gekennzeichnet, dass** er Mittel zur Winkelpositionierung (16, 24; 16, 47) umfasst, die zwischen dem Einsatz (17) und dem Haubengehäuse (5) angeordnet sind, um den Einsatz (17) in einer festen Winkelposition bezüglich des Haubengehäuses (5) und um die Achse (8) zuhalten.

13. Detektor nach Anspruch 12, **dadurch gekennzeichnet, dass** das Mittel zur Winkelpositionierung (16, 24; 16, 47) wenigstens einen Sitz (16) umfasst, der in dem Haubengehäuse (5) oder dem Einsatz (17) ausgebildet ist; und wenigstens einen Anhang (24; 47), der von dem anderen von dem Haubengehäuse (5) und dem Einsatz (17) getragen wird und in Eingriff mit dem Sitz (16) ist.

14. Detektor nach irgend einem der Ansprüche 7 to 13, **dadurch gekennzeichnet, dass** er ein Mittel zur axialen Positionierung (15; 46) umfasst, um den Einsatz (17) in einer axialen Referenzposition bezüglich dem Haubengehäuse (5) zu positionieren.

15. Detektor nach irgend einem der vorherigen Ansprüche, **dadurch gekennzeichnet, dass** die Passage (26; 45) durch eine Durchgangsbohrung (45) definiert ist.

16. Detektor nach irgend einem der vorherigen Ansprüche, **dadurch gekennzeichnet, dass** der tragenden Aufbau (3) einen Verbindungsbereich (6) umfasst, zur Verbindung mit dem Bremsglied, und der einstückig mit dem Haubengehäuse (5) ausgebildet ist.

17. Aufbau (3) zur Ausbildung eines Verschleißdetektors (1; 40) für ein Bremsglied für ein Fahrzeug; wobei der Aufbau (3) ein Haubengehäuse (5) umfasst, welches mit dem Bremsglied verbunden ist, wobei es einen Erfassungsbereich (29; 42) eines Verdrahtungssystems (2) aufnimmt, und eine Öffnung (9) aufweist, durch die das Verdrahtungssystem (2) eingepasst ist; **dadurch gekennzeichnet, dass** der Aufbau weiter einen Einsatz (17) umfasst, um den Erfassungsbereich (29; 42) zu tragen, wobei der Einsatz wenigstens eine Passage (26; 45) aufweist, die in Eingriff mit dem Verdrahtungssystem (2) ist, wobei der Einsatz durch die Öffnung (9) eingesetzt ist, so dass er die Öffnung (9) teilweise schließt, und mit dem Verdrahtungssystem (2) zusammenwirkt, um die Öffnung (9) in einer flüssigkeitsdichten Art und Weise zu schließen.

18. Aufbau nach Anspruch 17, **dadurch gekennzeichnet, dass** von dem Einsatz (17) und dem Haubengehäuse (5) wenigstens einer einen entsprechenden elastisch deformierbaren Bereich (44) (49) umfasst, der mit dem anderen von dem Einsatz (17) und dem Haubengehäuse (5) zusammenwirkt, um die Öffnung (9) in einer flüssigkeitsdichten Art und Weise zu schließen.

19. Aufbau nach Anspruch 17 oder 18, **dadurch gekennzeichnet, dass** der Einsatz (17) eine Durchgangsbohrung (45) aufweist, durch die das Verdrahtungssystem (2) eingepasst ist.

20. Aufbau nach Anspruch 17 oder 18, **dadurch gekennzeichnet, dass** der Einsatz (17) zwei parallele Rillen (26) aufweist, die mit entsprechenden Bereichen des Verdrahtungssystem (2) in Eingriff sind.

## Revendications

1. Détecteur d'usure (1 ; 40) pour un élément de freinage de véhicule, comprenant un système de câblage (5) ayant une partie de détection (29; 42) pour détecter, à l'usage, une condition d'usure limite dudit élément de freinage ; et un ensemble de support (3) pour supporter la partie de détection (29 ; 42) et le système de câblage (2), ledit détecteur d'usure comprenant en outre un boîtier à capot (5) logeant ladite partie de détection (29 ; 42) et ayant une ouverture (9) montée, à travers laquelle ledit système de câblage (2) s'étend ; **caractérisé en ce que** ledit ensemble de support (3) comprend également un insert (17) pour supporter ladite partie de détection (29 ; 42), ledit insert ayant au moins un passage (26 ; 45) mis en prise par le système de câblage (2) et s'étendant au moins partiellement à l'intérieur du boîtier à capot (5) ; des moyens élastiquement déformables (30, 44, 49, 41a) coopérant avec ledit insert (17) pour fermer ladite ouverture (9) et définir une chambre étanche (7) logeant au moins la partie de détection (29 ; 42).

2. Détecteur selon la revendication 1, **caractérisé en ce que** ledit système de câblage (2) comprend une âme conductrice (28 ; 41) et une partie de recouvrement élastiquement déformable (30 ; 41a) recouvrant ladite âme (28 ; 41) ; ladite partie de recouvrement (30 ; 41a) faisant au moins partie desdits moyens élastiquement déformables (30, 33, 49, 41a).

3. Détecteur selon la revendication 1 ou 2, **caractérisé en ce qu'**au moins l'un parmi ledit boîtier à capot (5) et ledit insert (17) comprend une partie élastiquement déformable (44) (49) faisant partie desdits moyens élastiquement déformables (30, 44, 49, 41a).

4. Détecteur selon l'une quelconque des revendications précédentes, **caractérisé en ce qu'**il comprend des moyens de retenue (30, 20 ; 47, 44) pour retenir ladite partie de détection (29 ; 42) dans une position fixe par rapport audit insert (17).

5. Détecteur selon l'une quelconque des revendications précédentes, **caractérisé en ce que** lesdits moyens de retenue (30, 20 ; 47, 44) comprennent au moins une partie (30 ; 44) desdits moyens élastiquement déformables (30, 44, 49, 41a).

6. Détecteur selon la revendication 4 ou 5, **caractérisé en ce que** lesdits moyens de retenue (30, 20 ; 47, 44) comprennent au moins un appendice élastique (47) supporté par ledit insert (17).

7. Détecteur selon l'une quelconque des revendications précédentes, **caractérisé en ce que** ledit insert (17) a un axe (8) et comprend une première partie d'extrémité axiale (19 ; 44) s'étendant à travers ladite ouverture (9), et une seconde partie d'extrémité axiale (20 ; 47) s'étendant à l'intérieur de ladite chambre étanche (7) et supportant ladite partie de détection (29 ; 42).

8. Détecteur selon les revendications 6 et 7, **caractérisé en ce que** ladite seconde partie d'extrémité axiale (47) comprend ledit appendice élastique (47).

9. Détecteur selon la revendication 7, **caractérisé en ce que** ledit insert (17) a deux rainures axiales (26), chacune définissant un passage respectif ; ladite partie de détection (29) étant enroulée en forme de U autour de ladite seconde partie d'extrémité axiale (20).

10. Détecteur selon la revendication 9, **caractérisé en ce que** ledit système de câblage (2) comprend une gaine (30) entourant ladite première partie d'extrémité axiale (19).

11. Détecteur selon la revendication 10, **caractérisé en ce que** ledit insert a une rainure circonférentielle intermédiaire (22) mise en prise par une partie d'extrémité libre (34) de ladite gaine (30).

12. Détecteur selon l'une quelconque des revendications 7 à 11, **caractérisé en ce qu'**il comprend des moyens de positionnement angulaire (16, 24 ; 16, 47) interposés entre ledit insert (17) et ledit boîtier à capot (5) pour maintenir ledit insert (17) dans une position angulaire fixe par rapport audit boîtier à capot (5) et autour dudit axe (8).

13. Détecteur selon la revendication 12, **caractérisé en ce que** lesdits moyens de positionnement angulaire (16, 24 ; 16, 47) comprennent au moins un siège (16) formé dans l'un parmi ledit boîtier à capot (5) et ledit insert (17) ; et au moins un appendice (24 ; 47) supporté par l'autre parmi le boîtier à capot (5) et ledit insert (17) et mettant en prise ledit siège (16).

14. Détecteur selon l'une quelconque des revendications 7 à 13, **caractérisé en ce qu'**il comprend des moyens de positionnement axial (15 ; 46) pour positionner l'insert (17) dans une position de référence axiale par rapport audit boîtier à capot (5).

15. Détecteur selon l'une quelconque des revendications précédentes, **caractérisé en ce que** ledit passage (26 ; 45) est défini par un trou débouchant (45).

16. Détecteur selon l'une quelconque des revendications suivantes, **caractérisé en ce que** lesdits moyens de support (3) comprennent une partie de raccordement (6) pour le raccordement audit élément de freinage et formés d'un seul tenant avec ledit boîtier à capot (5).

17. Ensemble (3) permettant de former un détecteur d'usure (1 ; 40) destiné à un élément de freinage de véhicule ; l'ensemble (3) comprenant un boîtier à capot (5) qui est raccordé audit élément de freinage, logeant une partie de détection (29 ; 42) d'un système de câblage (2) et ayant une ouverture (9) à travers laquelle le système de câblage (2) est monté ; **caractérisé en ce que** ledit ensemble comprend en outre un insert (17) pour supporter ladite partie de détection (29 ; 42), ledit insert ayant au moins un passage (26 ; 45) qui est mis en prise par ledit système de câblage (2), ledit insert étant inséré à travers ladite ouverture (9) pour fermer partiellement l'ouverture (9), et coopérant avec ledit système de câblage (2) pour fermer ladite ouverture (9) d'une manière étanche au fluide.

18. Ensemble selon la revendication 17, **caractérisé en ce qu'**au moins l'un parmi ledit insert (17) et ledit boîtier à capot (5) comprend une partie élastiquement déformable (44) (49) respective coopérant avec l'autre parmi l'insert (17) et ledit boîtier à capot (5) pour fermer ladite ouverture (9) d'une manière étanche au fluide.

19. Ensemble selon la revendication 17 ou 18, **caractérisé en ce que** ledit insert (17) a un trou débouchant (45) à travers lequel ledit système de câblage (2) est monté.

20. Ensemble selon la revendication 17 ou 18, **caractérisé en ce que** ledit insert (17) a deux rainures parallèles (26) mises en prise par des parties respectives dudit système de câblage (2).
